# EUROPÄISCHE PATENTSCHRIFT

(11) **EP 0 612 794 B1**
(45) Veröffentlichungstag und Bekanntmachung des Hinweises auf die Patenterteilung: **18.06.1997**
(21) Anmeldenummer: 94101813.7
(22) Anmeldetag: 07.02.1994
(51) Int. Cl.: C08K 3/08, C08K 5/00, C08K 3/00

(54) **Thermostabile kupferhaltige Polyamidformmassen**
Thermostable copper-containing polyamide mouldings
Masses à mouler en polyamide thermostables contenant du cuivre

(30) Priorität: 19.02.1993 DE 4305166
(43) Veröffentlichungstag der Anmeldung: 31.08.1994
(73) Patentinhaber: BAYER AG, 51368 Leverkusen (DE)
(72) Erfinder: El Sayed, Aziz, Dr., D-51375 Leverkusen (DE); Ostlinning, Edgar, Dr., D-40237 Düsseldorf (DE); Hennen, Alban, D-51377 Leverkusen (DE); Heger, Georg, Dr., D-47800 Krefeld (DE); Nielinger, Werner, Dr., D-47829 Krefeld (DE); Idel, Karsten-Josef, Dr., D-47802 Krefeld (DE); Sommer, Klaus, Dr., D-51467 Bergisch Gladbach (DE); Audenaert, Raymond, Dr., B-9220 Hamme (BE)

(56) Entgegenhaltungen:
- FR-A- 1 545 754
- FR-A- 1 581 934
- US-A- 3 814 728
- US-A- 3 947 424

## Beschreibung

Die Erfindung betrifft Polyamidformmassen mit verbesserter Thermo- und UV-Stabilität neben sehr guten mechanischen Eigenschaften enthaltend kolloidales in situ gebildetes Kupfer sowie ein Verfahren zu ihrer Herstellung und daraüs hergestellte Formkörper.

Polyamid-Formmassen sind hochwertige Thermoplaste, die sich durch hohe Wärmeformbeständigkeit, sehr gute mechanische Eigenschaften, hohe Zähigkeit, gute Resistenz gegenüber Chemikalien und leichte Verarbeitbarkeit auszeichnen. Die Eigenschaften der Polyamide lassen sich durch Verstärkung mit Glasfasern, Glaskugeln, mineralischen Füllstoffen und Mischungen aus diesen merklich erweitern. Elastomermodifizierung verbessert die Schlagzähigkeit von Polyamiden. Durch die Vielzahl der Kombinationsmöglichkeiten werden immer neue maßgeschneiderte Produkte für spezielle Einsatzgebiete entwickelt.

Es werden immer neue Einsatzgebiete für Polyamidanwendungen erschlossen. Höhere Anforderungen an mechanische Eigenschaften sind in der Regel mit der Anforderung an eine verbessserte Thermostabilität und evtl. auch UV-Beständigkeit verbunden. Die Anwendungspalette der Polyamide umfasst Fasern, Folien, Schmelzkleber und Formteile für die Elektro-, Bau-, Möbel- und Automobilindustrie.

Die mangelnde Stabilität der Polyamide gegenüber thermischer Oxidation und Lichteinwirkung ist seit langem bekannt. Viele Stabilisatorsysteme sind in der Literatur veröffentlicht (siehe z.B. Vieweg/Müller; Kunststoff Handbuch Band VI Polyamide, oder GB 908647, DE 1257425, DE 2643204).

Durch Stabilisatoren wird der oxidative Abbau der Polyamidoberfläche verzögert aber nicht unterbunden. Als Additive zur Thermostabilsatbilisierung haben sich in der Praxis **Kupfer bzw. Kupfersalze d.h.** Cu(I), Cu (II)- Salze oder Kupfer-Komplexe allein oder in Kombination mit Alkalihalogeniden, **Phenolische** Antioxydantien oder **Aminische** Antioxydantien bewährt

Als Maß für der Stabilisierende Wirkung von Additiven wird bei **Thermostabilisatoren** die Abnahme der Schlagzähigkeitswerte nach Lagerung in Umluftöfen bei erhöhten Temperaturen (120- 140°C) ermittelt

**Bei der Stabilisierung gegen UV-Strahlung** die Zeit bis zur Abnahme des Oberflächenglanzes nach künstliche Bewitterung in Xenon Weatherometer (Brenner 6000 Watt, Pyrex Filter, Zyklus 102:18 min) visuell beurteilt

Mit den Kupferstabilisatoren erreicht man ausreichende Thermostabilisierung bei den Polyamiden bis zu einer Testtemperatur von 140°C. Auch gegen UV-Strahlen zeigen die Kupferverbindungen gute stabilisierende Wirkung. Hauptsächlich werden hierbei Kupferhalogenide eingesetzt CuJ und CuBr haben sich als am besten geeignete Cu-Verbindungen erwiesen. Durch die Kombination von Cu-Halogenide mit Alkalihalogeniden wird die Wirkung der Cu-Salze deutlich verbessert Als Alkalihalogenidzusatz werden LiBr, KBr oder KJ verwendet Nachteilig ist die Eigenfarbe der Kupfersalze. Deshalb werden auch farblose Kupferkomplexe in geringem Umfang verwendet.

Im Französischen Patent Nr. 906893 wird feinteiliges elektrochemisch hergestelltes kolloidales Kupfer als Thermostabolisator für Polyamidfolien beschrieben. Seine Wirkung geht jedoch nicht wesentlich über die der genannten Kupfersalze hinaus.

Mit aminischen Antioxydatien erreicht man ebenfalls eine ausreichende Stabilisierwirkung bis 130°C Alterungstemperatur. Aminische Antioxydantien haben aber entweder von vorne herein eine dunkle Eigenfarbe bzw. neigen an der Luft und bei Einwirkung von UV-Strahlung zu starker Verfärbung.

Phenolische Antioxydantien zeigen bis 120°C Alterungstemperatur gute Thermostabilisierwirkung. Ab 120°C ist die wirksame Zeitspanne der Stabilisierung merklich kurz.

80 % des Weltweit hergestellten Polyamids geht auf aliphatische Polyamide zurück. Hauptsächlich werden hier PA 66, PA 6 neben geringen Menge an PA 610 oder PA 46 eingesetzt.

Es wird angenommen, daß sich in Gegenwart von Sauerstoff an der Polyamidoberfläche chromophore Gruppen bilden. Diese chromophoren Gruppen absorbieren UV- Licht und bilden freie Radikale, die zur Verwitterung der Oberflächen führen Deshalb müssen Polyamide gegen UV-Licht stabilisiert werden.

Thermo-Stabilisatoren verzögern in Gegenwart von Sauerstoff die Bildung von Chromophorengruppen und zeigen deshalb auch je nach Wirkungsgrad eine Stabilisierung gegen UV-Strahlung. Nachteilig ist die stärkere Verfärbung heller gefärbter Polyamide nach der Bewitterung bei Kupfersalzen oder aminischen Antioxydantien. Phenolische Antioxydantien zeigen als Stabilisatoren geringfügige UV-Stabilisierende Wirkung. Erst die Kombination von phenolischen Antioxydantien mit Lichtschutzmitteln auf Basis gehinderter Amine (HALS= hindered amine light stablizer) und UV-Absorbern verleiht Polyamiden sehr gute Witterungsbeständigkeit.

Die Erfindung betrifft Polyamid-Formmassen mit verbesserter Thermostabilität und Witterungsbeständigkeit auf Basis von Polyamid, Copolyamid oder Mischungen aus Polyamiden enthaltend in situ gebildetes elementares feinverteiltes Kupfer als Stabilisator. Die Polyamide können aliphatische oder aromatische Strukturelemente oder deren Mischungen enthalten.

Überraschend wurde gefunden, daß z.B. in Gegenwart von stark reduzierenden Mitteln wie Hypophosphitsalzen, Salzen der Dithionsäuren (dithionite) die Wirkung des Kupferstabilisators deutlich gesteigert wird. Ein Teil des verwendeten Kupferstabilisators wird - wie XANES-Spektren (Spektren der Nahkantenstruktur von durch absorbierte Röntgenstrahlung ausgelösten niederenergetischen Sekundärelektronen) zeigen - in situ zu elementaren Kupfer reduziert wird.

Gegenstand der Erfindung sind thermostabile, witterungsbeständige Polyamid-Formmassen auf Basis von aliphatischen oder aromatischen Polyamiden, Copolyamiden oder Mischungen daraus, welche neben 10 bis 5000 ppm ionischen oder komplexierten Cu-Stabilisator von 10 bis 2 500 ppm bevorzugt 30 bis 2 000 ppm in situ gebildetes elementares feinverteiltes Kupfer enthalten. Das elementare Kupfer kann aus dem ionischen oder komplexierten Kupferstabilisator in der Formmasse oder noch vor oder während der Polymerisation der für die Formmasse verwendeten Polyamide in situ gebildet werden. Die Erfindung betrifft ferner ein Verfahren zur Herstellung der erfindungsgemäßen Formmassen, gekennzeichnet durch Reduktion der Mischung von Polyamid oder deren Ausgangsstoffe mit Kupferstabilisator mit Hilfe von Salzen der hypophosphorigen oder der Dithionsäure. Die Konzentration des Reduktionsmittels beträgt bevorzugt von 10 bis 5 000 ppm der fertigen Formmasse.

Geeignete Polyamide sind teilkristalline Polyamide, aromatische oder teilaromatische Polyamide sowie amorphe Polyamide. Bevorzugte Polyamide sind Polyamid 66, PA 6, PA 46, PA 6 10, PA 11, PA 12 oder Copolyamide aus diesen sowie Mischungen aus den genannten Polyamiden.

Als Verstärkungsstoffe für die erfindungsgemäßen Formmassen werden handelsübliche Glasfasern und/oder Koblenfasern, Mineralfasern, gegebenenfalls mit Oberflächenbehandlung für Polyamide, eingesetzt.

Als Füllstoffe für die erfindungsgemäßen Formmassen werden handelsübliche Mineralien wie Kaolin, Wollastonit, Talkum, Glimmer oder Kreide, gegebenenfalls mit Oberflächenbehandlung für Polyamide, verwendet.

Als Elastomermodifizierung für die erfindungsgemäßen Formmassen werden handelsübliche EP(D)M-Kautschuke oder Acrylatkautschuke mit oder ohne funktionelle Kopplungsgruppen verwendet.

Als Verarbeitungsadditive für die erfindungsgemäßen Formmassen werden handelsübliche Gleitmitteln und/oder Nukleierungsmitteln eingesetzt.

Kupferstabilisatoren zur Herstellung des elementares Kupfers für die erfindungsgemäßen Formmassen sind ionisches oder komplexiertes Kupfer wie z.B. CuJ, CuBr, CuCl, Cu-acetat,Cu-naphtenat, CuCO₃, Cu-hydroxid, CuCN, Kupferhydroxycarbonat oder Kupferkomplexe auf Basis von Aminen, Phosphinen, Phenolen oder Cyaniden.

Diese werden allein oder in Mischung mit Alkalihalogeniden eingesetzt wie z.B. KJ,LiBr, KBr,.

Das elementare Kupfer wird in den Formmassen z.B. während der Compoundierung durch Zugabe von Salzen der Hypophosphorige Säure oder Dithionsäure erzeugt.

Eine andere Möglichkeit besteht darin die Kupfersalze in ε-Caprolactam zu reduzieren und anschließend das ε-Caprolactam zu Polyamid 6 zu polymerisieren. Durch Erhöhung der Konzentration des Kupfersalze in Caprolactam und anschließende Reduktion bzw. Polymerisation können Polyamid-Konzentrate mit Kupferstabilisator hergestellt werden, die als Stabilisator-Konzentrate zu handelsüblichen Polyamiden zugegeben werden können.

Durch die Bildung des elementaren Kupfer in situ tritt zum Teil Schwarzverfärbung der Polyamide bzw. der Polyamidformmassen auf.

Folgende Produkte wurden in den nachstehenden Beispielen verwendet:
Polyamid 6 (PA6)= Durethan B 31F® der Bayer AG (rel. Viskosität µᵣₑₗ.: 3, gemessen in 1 % iger Metakresollösung bei 25°C)
Polyamid 66 (PA 66) = Durethan A30®der Bayer AG ( rel. Viskosität µᵣₑₗ: 3 , gemessen in 1 % iger Metakresollösung bei 25°C)
Natriumhypophosphit, Fa. Merck Darmstadt

### Beispiel 1 bis 5

Die Einsatzstoffe (Zusammensetzung siehe Tabelle 1) wurden gemischt, in einem Zweischneckenkneter (ZSK 32 der Fa. Werner & Pfleiderer) extrudiert und die Glasfasern in die Schmelze dosiert Die so erhaltenen Stränge wurden granuliert, getrocknet und zu 80 x 10 x 4 mm Stäben gespritz. Die Izod-Schlagzähigkeit wurde im Vergleich zum Ausgangsprodukt nach Thermoalterung bei 140°C bestimmt (Tab. 1).

### Beispiel 6 bis 10

Beispiele 1 bis 5 wurden mit PA 66 statt PA 6 wiederholt (Tab. 2).

**Tabelle 1**

| Beispiel | | | 1 | 2 | 3 | 4 | 5 |
|---|---|---|---|---|---|---|---|
| | | | Vergleich | Vergleich | Vergleich | Vergleich | |
| PA 6 | | % | 70,00 | 69,95 | 69,95 | 69,79 | 69,74 |
| Glasfaser | | % | 30,00 | 30,00 | 30,00 | 30,00 | 30,00 |
| CuJ/KJ (1:3) | | % | 0,00 | 0,00 | 0.00 | 0,21 | 0,21 |
| Kolloidales Cu | | % | 0,00 | 0,00 | 0,05 | 0,00 | 0,00 |
| Na-Hypophosphit | | % | 0,00 | 0,05 | 0,00 | 0,00 | 0,05 |
| | | | | | | | |
| IZOD-an nach Thermoalterung bei | | | | | | | |
| 140°C | 0 h | KJ/m² | 76 | 75 | 76 | 71 | 80 |
| | 500 h | KJ/m² | 33 | 32 | 31 | 43 | 76 |
| | 1000 h | KJ/m² | 30 | 29 | 29 | 43 | 72 |
| Zeit bis zum Glanzverlust nach künstlicher Bewitterung *) | | Stunden | 700 | 700 | 700 | 1500 | 3000 |
| | | | | | | | |

| | | | | | | | |
|---|---|---|---|---|---|---|---|
| *) Künstliche Bewitterung durchgeführt im ATLAS Xenon Weatherometer 6000W, Pyrex Filter, Zyklus 102:18, | | | | | | | |

**Tabelle 2**

| Beispiel | | | 6 | 7 | 8 | 9 | 10 |
|---|---|---|---|---|---|---|---|
| | | | Vergleich | Vergleich | Vergleich | Vergleich | |
| PA 66 | | % | 70,00 | 69,95 | 69,95 | 69,79 | 69,74 |
| Glasfaser | | % | 30,00 | 30,00 | 30,00 | 30,00 | 30,00 |
| CuJ/KJ (1:3) | | % | 0,00 | 0,00 | 0.00 | 0,21 | 0,21 |
| Kolloidales Cu | | % | 0,00 | 0,00 | 0,05 | 0,00 | 0,00 |
| Na-Hypophosphit | | % | 0,00 | 0,05 | 0,00 | 0,00 | 0,05 |
| | | | | | | | |
| IZOD an nach Thermoalterung bei | | | | | | | |
| 140°C | 0 h | KJ/m² | 70 | 69 | 62 | 61 | 73 |
| | 500 h | KJ/m² | 27 | 27 | 28 | 50 | 71 |
| | 1000 h | KJ/m² | 25 | 28 | 29 | 38 | 64 |
| Zeit bis zum Glanzverlust nach künstlicher Bewitterung*) | | Stunden | 500 | 500 | 600 | 1300 | 2500 |

| | | | | | | | |
|---|---|---|---|---|---|---|---|
| *) Künstliche Bewitterung durchgeführt im ATLAS Xenon Weatherometer 6000W, Pyrex Filter, Zyklus 102:18, | | | | | | | |

## Patentansprüche

1. Thermostabile witterungsbeständige Polyamidformmasse auf Basis von aliphatischen oder aromatischen Polyamiden, welche neben von 10 bis 5 000 ppm ionischem Kupferstabilisator oder komplexem Kupferstabilisator von 10 bis 2 500 ppm elementares, fein disperses Kupfer als Stabilisator enthalten, das aus dem ionischen bzw. komplexierten Kupfer in der Formmasse oder noch vor oder während der Polymerisation der für der Formmasse verwendeten Polyamide in diesen in situ gebildet wird.

2. Polyamidformmasse nach Anspruch 1 dadurch gekennzeichnet, daß das elementare Kupfer in kolloidaler Form vorliegt.

3. Polyamidformmasse nach den Ansprüche 1 und 2 dadurch gekennzeichnet, daß das elementare Kupfer bei einem Compoundierungsschritt der Formmasse in situ aus Kupferverbindungen erzeugt wird.

4. Polyamidformmasse nach Anspruch 1-3 dadurch gekennzeichnet, daß das Polyamid aus PA 6, PA 66, PA 46, PA 610 , PA 11 oder PA 12 oder Copolyamiden aus diesen sowie Mischungen aus den genannten Polyamiden besteht.

5. Polyamidformmasse nach Anspruch 1-4 dadurch gekennzeichnet, daß der ionische bzw. komplexierte Cu-Stabilisator aus CuBr,CuJ,CuCl,Cu-Carbonat, Cu-Hydroxycarbonat, CuCN, Cu-Naphtenat oder Kupfer Komplexen auf Basis von Aminen, Phosphinen, Phenolen oder Cyaniden besteht.

6. Polyamidformmasse nach den Ansprüche 1-5 dadurch gekennzeichnet, daß sie als Füllstoffe Kaolin, Wollastonit Talkum oder Kreide und/oder Verstärkungsstoffe wie Glasfasern, Kohlefasern oder Mineralfasern allein oder in Mischung enthalten.

7. Verfahren zur Herstellung von Polyamidformmassen nach Anspruch 1-6 durch Mischen von ionischem oder komplexem Kupferstabilisator mit Polyamiden oder deren Ausgangsstoffen dadurch gekennzeichnet, daß das elementare Kupfer durch Reduktion mit Hilfe von Salzen der Hypophosphorigen Säure oder der Dithionsäure aus dem Kupferstabilisator erzeugt wird, wobei die Konzentration des Reduktionsmittels von 10 bis 5 000 ppm der fertigen Formmasse beträgt.

8. Verfahren zur Herstellung von Polyamidformmasse nach Anspruch 7 dadurch gekennzeichnet, daß das elementare Kupfer aus Kupfer-Verbindungen vor oder während der Polymerisation eines Teils des Polyamides gebildet wird und das daraus entstandene Konzentrat mit weiterem Polyamid gemischt wird.

9. Verwendung der Formmasse gemäß den Ansprüchen 1-6 zur Herstellung geformter Körper.

10. Formkörper hergestellt aus Formmassen gemäß den Ansprüchen 1-6.

## Claims

1. Thermally stable weather-resistant polyamide moulding composition based on aliphatic or aromatic polyamides, which composition, in addition to 10 to 5000 ppm of ionic copper stabiliser or complexed copper stabiliser, contains from 10 to 2500 ppm of elemental, finely dispersed copper as a stabiliser which is formed *in situ* in the moulding composition from the ionic or complexed copper or in the polyamides used for the moulding composition before or during polymerisation of the polyamides.

2. Polyamide moulding composition according to claim 1, characterised in that the elemental copper is present in colloidal form.

3. Polyamide moulding composition according to claims 1 and 2, characterised in that elemental copper is produced *in situ* from copper compounds during a compounding stage of the moulding composition.

4. Polyamide moulding composition according to claims 1 to 3, characterised in that the polyamide consists of PA 6, PA 66, PA 46, PA 610, PA 11 or PA 12 or of copolyamides thereof as well as of blends of the stated polyamides.

5. Polyamide moulding composition according to claims 1 to 4, characterised in that the ionic or complexed Cu stabiliser consists of CuBr, CuI, CuCl, Cu carbonate, Cu hydroxycarbonate, CuCN, Cu naphthenate or of copper complexes based on amines, phosphines, phenols or cyanides.

6. Polyamide moulding composition according to claims 1 to 5, characterised in that it contains kaolin, wollastonite, talcum or chalk as fillers and/or reinforcing materials, such as glass fibres, carbon fibres or mineral fibres, either alone or as a mixture.

7. Process for the production of polyamide moulding compositions according to claims 1 to 6 by mixing an ionic or complexed copper stabiliser with polyamides or the starting materials thereof, characterised in that the elemental copper is produced from the copper stabiliser by reduction with salts of hypophosphorous acid or of dithionic acid, wherein the concentration of the reducing agent in the finished moulding compound is from 10 to 5000 ppm.

8. Process for the production of a polyamide moulding composition according to claim 7, characterised in that the elemental copper is formed from copper compounds before or during polymerisation of a proportion of the polyamide and the resultant masterbatch is mixed with further polyamide.

9. Use of the moulding composition according claims 1 to 6 for the production of moulded articles.

10. Mouldings produced from moulding compositions according to claims 1 to 6.

## Revendications

1. Matière à mouler en polyamides stable à la chaleur et aux influences climatiques, à base de polyamides aliphatiques ou aromatiques, contenant en tant que stabilisant, avec 10 à 5 000 ppm d'un stabilisant au cuivre ionique ou d'un stabilisant au cuivre complexe, de 10 à 2 500 ppm de cuivre élémentaire à l'état de fine dispersion, lequel a été formé in situ à partir du cuivre ionique ou complexé dans la matière à mouler ou encore avant ou durant la polymérisation des polyamides constituant la matière à mouler.

2. Matière à mouler en polyamides selon la revendication 1, caractérisée en ce que le cuivre élémentaire est à l'état colloïdal.

3. Matière à mouler en polyamides selon les revendications 1 et 2, caractérisée en ce que le cuivre élémentaire a été produit in situ à partir de dérivés du cuivre dans une opération de mélange de la matière à mouler.

4. Matière à mouler en polyamides selon les revendications 1 à 3, caractérisée en ce que le polyamide consiste en PA 6, PA 66, PA 46, PA 610, PA 11 ou PA 12 ou en copolyamides des mêmes constituants ou en mélanges de ces polyamides.

5. Matière à mouler en polyamides selon les revendications 1 à 4, caractérisée en ce que le stabilisant au cuivre ionique ou complexé consiste en CuBr, CuI, CuCl, carbonate de Cu, hydroxycarbonate de Cu, CuCN, naphténate de Cu ou complexes de cuivre à base d'amines, de phosphines, de phénols ou de cyanures.

6. Matière à mouler en polyamides selon les revendications 1 à 5, caractérisée en ce qu'elle contient en tant que matières de charge du kaolin, de la wollastonite, du talc ou de la craie et/ou des matières renforçantes telles que des fibres de verre, des fibres de carbone ou des fibres minérales, isolément ou en mélanges entre elles.

7. Procédé de préparation de matières à mouler en polyamides selon les revendications 1 à 6 par mélange d'un stabilisant au cuivre ionique ou complexe avec les polyamides ou leurs produits de départ, caractérisé en ce que le cuivre élémentaire est produit à partir du stabilisant au cuivre par réduction à l'aide de sels de l'acide hypophosphoreux ou de l'acide dithioneux, la concentration de l'agent réducteur représentant de 10 à 5 000 ppm par rapport à la matière à mouler finie.

8. Procédé de préparation de la matière à mouler en polyamides selon la revendication 7, caractérisé en ce que le cuivre élémentaire est formé à partir de composés du cuivre avant ou durant la polymérisation d'une partie du polyamide, et le concentré ainsi obtenu est mélangé avec des compléments de polyamide.

9. Utilisation de la matière à mouler selon les revendications 1 à 6 pour la fabrication d'objets moulés.

10. Objets moulés fabriqués à partir des matières à mouler selon les revendications 1 à 6.
